# EUROPÄISCHE PATENTANMELDUNG

(11) **EP 1 783 851 A1**
(43) Veröffentlichungstag der Anmeldung: **09.05.2007**
(21) Anmeldenummer: 06022738.6
(22) Anmeldetag: 31.10.2006
(51) Int. Cl.: H01M 8/04, H01M 8/02

(54) **Aus einem Material zur Wassersorption während der Kaltstartphase bestehende Brennstoffzellenanordnung**

(30) Priorität: 02.11.2005 DE 102005052325
(71) Anmelder: P21 - Power for the 21st Century GmbH, 85649 Brunnthal (DE)
(72) Erfinder: Münter, Harald, 80686 München (DE)
(74) Vertreter: Müller, Thomas

(57) **Zusammenfassung**

Es wird eine Brennstoffzellenanordnung beschrieben, die eine Reaktionsschicht (12), und ein auf einer Seite der Reaktionsschicht (12) angeordnetes, Kanäle (16) aufweisendes Kanalelement (11), das zur Zuführung von Oxidationsgas an eine Gasdiffusionslage (15) durch die Kanäle (16) bestimmt ist; aufweist und das erfindungsgemäß dadurch gekennzeichnet ist, dass zumindest ein Teil des Kanalelements (11) aus einem Wasser-aufnehmenden Material (18) besteht, das über zumindest einen Teil seiner Oberfläche mit den von dem Kanalelement (11) gebildeten Kanälen (16) in Verbindung steht.

## Beschreibung

Die vorliegende Erfindung ist auf ein Brennstoffzellensystem gemäß dem Oberbegriff von Patentanspruch 1 gerichtet.

Beim Kaltstart einer Brennstoffzelle fällt sofort Produktwasser an. Ein Problem bei bisherigen Brennstoffzellen ist, dass dieses Produktwasser aufgrund der noch in der Brennstoffzellenanordnung vorherrschenden, relativ niedrigen Temperaturen und des damit verbundenen Unterschreitens des Taupunkts aus der Luft oder dem Sauerstoff kondensiert, was zu einem Verstopfen der Kanäle zur Oxidationsgaszufuhr und einer Effizienzminderung der Brennstoffzelle führen kann.

Die DE 199 29 550 B4 beschreibt ein Brennstoffzellensystem, bei dem sich im Abgasstrom befindendes Produktwasser mit einem Kondensiermittel, das beispielsweise in der Ableitung des Oxidationsgases angeordnet ist, zurück gewonnen und weiteren Prozessen zugeführt wird.

Die DE 10 2004 028 780 A1 ist auf eine Vorrichtung zum Feuchtemanagement in einer Brennstoffzelle gerichtet, bei der Feuchtigkeit von einer Abluft zu einer trockenen Zuluft übertragen wird. Dazu ist vorgesehen, dass eine poröse Struktur verwendet wird. Die Feuchtigkeit wird in dieser porösen, trockenen Struktur gespeichert und nachfolgend an die trockene Zuluft abgegeben.

Die DE 199 62 679 A1 beschreibt den Betrieb einer Hochtemperatur-Polymer-Elektrolyt-Membran-Brennstoffzelle, bei der Feuchtigkeit beispielsweise beim Start zwischengespeichert werden kann, was durch einen Zwischenspeicher wie einen Schwamm erfolgt.

Den vorgestellten Ansätzen ist jedoch gemeinsam, dass sie eine zusätzliche, platzerfordernde Struktur umfassen und nicht dazu eingesetzt werden, die bei einem Kaltstart mit dem auftretenden Produktwasser entstehenden Probleme zu vermeiden, so dass weiterhin ein stärker dimensioniertes oder ein zusätzliches Oxidationsgaszuführsystem, beispielsweise ein Lüfter oder dergleichen, vorgesehen sein muss.

Es ist daher die Aufgabe der vorliegenden Erfindung, einen Ansatz zur Handhabung von Produktwasser bei einem Kaltstart zur Verfügung zu stellen, bei dem ohne zusätzlichen Bauaufwand in der Brennstoffzelle das Zuluftzuführsystem vereinfacht und damit verbilligt werden kann.

Diese Aufgabe wird erfindungsgemäß durch die Bereitstellung einer Brennstoffzellenanordnung gemäß dem unabhängigen Patentanspruch 1 gelöst. Weitere vorteilhafte Ausführungsformen, Aspekte und Details der vorliegenden Erfindung ergeben sich aus den abhängigen Ansprüchen, der Beschreibung und den beigefügten Zeichnungen.

Der Erfindung liegt die Idee zugrunde, einen Teil der Brennstoffzelle selbst als einen Zwischenspeicher für Produktwasser zu verwenden, um damit geringer dimensionierte, nur auf den Normalbetrieb der Brennstoffzelle ausgelegte Zuluftzuführsysteme, beispielsweise Lüftersysteme, verwenden zu können.

Dementsprechend ist die Erfindung gerichtet auf eine Brennstoffzellenanordnung, welche aufweist: eine Reaktionsschicht, ein auf einer Seite der Reaktionsschicht angeordnetes, Kanäle aufweisendes Kanalelement, das zur Zuführung von Oxidationsgas an eine Gasdiffusionslage durch die Kanäle bestimmt ist; wobei die Anordnung dadurch gekennzeichnet ist, dass zumindest ein Teil des Kanalelements aus einem Wasser-aufnehmenden Material besteht, das über zumindest einen Teil seiner Oberfläche mit den von dem Kanalelement gebildeten Kanälen in Verbindung steht.

Unter einer Brennstoffzellenanordnung ist hier eine Gruppierung von Bauelementen zu verstehen, die gemeinsam zumindest Teile der Funktion einer Brennstoffzelle erfüllen können.

Das hier als Reaktionsschicht bezeichnete Element ist ein bei Brennstoffzellen stets eingesetztes Bauteil, das aus einer semipermeablen Membran und zwei, auf den beiden Seiten der Membran aufgebrachten Gasdiffusionslagen besteht. An der Membran findet die eigentliche stromerzeugende Reaktion statt, bei der Elektronen und Protonen entstehen und wieder vereinigt werden, während die Gasdiffusionslagen dazu dienen, den Kraftstoff (meist Wasserstoffgas) und ein Oxidationsmittel wie Sauerstoff oder Luft, der Membran zuzuführen und an dieser gleichmäßig zu verteilen.

Der Kraftstoff und das Oxidationsgas wiederum werden den Gasdiffusionslagen über ein Kanal- bzw. Führungssystem zugeleitet, das in Form einer als Kanalelement bezeichneten Baugruppe oder eines Bauteils auf den Gasdiffusionslagen aufliegt, um ein "Sandwich" mit einem Schichtaufbau zu bilden. Unter einem Kanal ist hierbei ein länglicher, rinnenartiger, zur Gasdiffusionslage hin offener Einschnitt im Kanalelement zu verstehen. Das Kanalelement kann unterschiedliche Anordnungen von Kanälen aufweisen, beispielsweise eine Reihe von parallel geführten Kanälen, sternförmig verlaufende Kanäle, oder an ihren Enden so miteinander verbundenen Kanäle, dass diese eine lange, serpentinenförmige Gasführung bilden. Obwohl erfindungsgemäß von mehreren Kanälen die Rede ist, da dies in der Praxis die normale Ausführungsform für Brennstoffzellen ist, versteht sich, dass die Erfindung auch mit einem einzelnen solchen Oxidationsgaszufuhrkanal funktioniert, sollte eine entsprechende Brennstoffzelle konstruiert werden.

Bei der Reaktion innerhalb der Brennstoffzelle entsteht in dem Teil des Kanalsystems, das der Oxidationsmittelzufuhr (und -abfuhr) dient, Wasser, das bislang durch einen höheren Luftdurchsatz abgeführt werden musste. Durch die Verwendung eines Wasser-aufnehmenden Bereichs in den einzelnen Kanälen kann jedoch das Verstopfen der Kanäle durch das Wasser während dieser kritischen Phase verhindert werden. Dies wirkt sich vorteilhaft auf die Dimensionierung des zur Zu- und Abfuhr des Oxidationsgases verwendeten Gebläsesystems aus.

Um diese Funktion insbesondere bei einem Kaltstart der Brennstoffzelle, also bei einem Start, bei dem die Brennstoffzelle zuvor so lange nicht betrieben worden ist, dass ihre Temperatur einer Umgebungstemperatur entspricht, zu gewährleisten, wird es bevorzugt, dass sie ein Oxidationsgaszufuhrsystem beinhaltet, das bezüglich der Volumen des von ihm in die Kanäle einleitbaren Oxidationsgases auf den Betrieb in einem Normalbetriebszustand ausgelegt ist, jedoch aufgrund der Bemessung des Wasser-aufnehmenden Materials kein zusätzliches und/oder stärkeres Oxidationsgaszufuhrsystem für einen Kaltstart beinhaltet. Ein wichtiger Vorteil der Erfindung ist damit, dass Kosten bei der Herstellung der Brennstoffzelle eingespart werden können, weil ein preisgünstigeres, weniger leistungsstarkes Lüftungssystem verwendet werden kann.

Erfindungsgemäß stehen die Wasser-aufnehmenden Bereiche über zumindest einen Teil ihrer Oberfläche mit den von dem Kanalelement gebildeten Kanälen in Verbindung, so dass eine Aufnahme des Wassers durch das Wasser-aufnehmende Material erfolgen kann. Anders ausgedrückt, bilden diese Oberflächen der Wasser-aufnehmenden Bereiche die Kanalwände der Oxidationsgaskanäle. Für die konkrete Ausgestaltung und Positionierung dieser in Verbindung stehenden Bereiche des Wasser-aufnehmenden Materials stehen zahlreiche Möglichkeiten zur Verfügung.

Vorzugsweise sind die Kanäle des Kanalelements durch Stege zwischen einer Grundplatte und der Gasdiffusionslage abgegrenzt und ist zumindest ein Teil des Querschnitts der Stege aus Wasser-aufnehmendem Material ausgebildet. Dies kann fertigungstechnisch beispielsweise dadurch erreicht werden, dass eine Basisplatte mit eingearbeiteten Kanälen mit einer Deckplatte aus Wasser-aufnehmendem Material, in die entsprechend den später unter ihnen zu liegen kommenden Kanälen Aussparungen eingebracht, beispielsweise gestanzt, sind, so dass die Bereiche der Stege, die in Kontakt mit der Gasdiffusionslage kommen, aus Deckplattenmaterial bestehen und damit Wasser-aufnehmend sind.

Alternativ können die gesamten Stege aus Wasser-aufnehmendem Material bestehen. Durch diese bevorzugte Maßnahme kann die Menge an Wasser-aufnehmendem Material und die mit dem Kanal in Verbindung stehende Oberfläche vergrößert werden, so dass rascher mehr Wasser aufgenommen werden kann. Eine solche Kontaktplatte kann beispielsweise dadurch hergestellt werden, dass in eine Basisplatte eine wannenartige Vertiefung eingearbeitet wird (gegebenenfalls mit Zu- und Abläufen), in die dann eine passend geschnittene Platte aus Wasser-aufnehmendem Material eingelegt wird, die mit Ausschnitten zur Ausbildung der Kanäle versehen ist.

In einer weiteren bevorzugten Ausführungsform sind die Kanäle des Kanalelements auf allen Seiten von Wasser-aufnehmendem Material umgeben. Auf diese Weise ist die Oberfläche des Wasser-aufnehmenden Materials zu den Kanälen hin maximiert. Diese Ausführungsform kann dadurch erreicht werden, dass die Kanäle einer Basisplatte mit Wasser-aufnehmendem Material ausgekleidet oder beschichtet werden, oder dadurch, dass in eine Platte Wasser-aufnehmendem Materials die Kanäle komplett eingearbeitet werden, und diese Platte mit den Kanälen entweder in die Wanne einer Basisplatte eingelegt wird oder aber, ein geeignetes Material vorausgesetzt, dass die Platte das vollständige Kanalelement bildet.

Aus fertigungstechnischen Gründen oder aus Gründen der Leistungsfähigkeit des erfindungsgemäßen Systems können sich die Bereiche Wasser-aufnehmenden Materials jeweils über die gesamte Länge der Kanäle des Kanalelements erstrecken. Es ist jedoch ebenso möglich, beispielsweise aus Kostengründen, dass sich das Wasser-aufnehmende Material nur über einen Teil der Länge der Kanäle erstreckt.

Als Wasser-aufnehmendes Material kommt grundsätzlich jedes Material in Frage, dass an oder in sich Wasser zu binden/speichern vermag. Vorzugsweise ist das Wasser-aufnehmende Material ein hydrophiles Material, das heißt ein Material, das eine Affinität zu Wasser zeigt und in seine Strukturen einlagert. Das hydrophile Material kann beispielsweise ein polymeres Material oder ein keramisches Material sein.

Nachfolgend werden einige vorteilhafte, jedoch nicht ausschließliche Beispiele für Wasser-aufnehmende Materialien beschrieben. Vorteilhaft kann das Wasser-aufnehmende Material so gewählt sein, dass es gleichzeitig auch Gefrierpunkt erniedrigend wirkt.

Beispielsweise kann das Wasser-aufnehmende Material als makroporöses Kohlenstoff-Fließ -Papier oder als aus Kohlenstofffasern gewobenes Material ausgebildet sein. Die Eigenschaften dieser Materialien können durch Beschichtung beziehungsweise Einbringung von geeigneten Zusatzstoffen, wie beispielsweise Teflon oder dergleichen, weiter modifiziert werden. Bei diesen Materialien handelt es sich um klassisches GDL-Material, welches zu diesem Verwendungszweck vorteilhaft in größerer Dicke hergestellt wird. Weiter könnte auch eine Art Schaum, beispielsweise eine Art Kohlenstoff-Schaum oder dergleichen, verwendet werden, der beispielsweise spritztechnisch durch die Beimengung von Gas erhalten werden kann. Darüber hinaus sind auch metallische Schäume denkbar.

Neben seinen chemisch-physikalischen Eigenschaften kann ebenfalls die Struktur des Materials seine Wasser-aufnehmenden Eigenschaften begründen. Das Wasser-aufnehmende Material kann so beispielsweise ein mikrokapillares Material sein. Beispiele hierfür sind schwammartige Strukturen oder Mikrofaserstrukturen.

In Fällen, in denen die pro Fläche des Wasser-aufnehmenden Materials maximal aufzunehmende Wassermenge nicht zu groß ist, kann in einer bevorzugten Ausführungsform das entstehende Kondensatwasser an der Oberfläche des Wasser-aufnehmenden Materials adsorbieren, statt in selbigem aufgenommen zu werden, oder zusätzlich dazu. Zusätzlich oder alternativ kann das entstehende Kondensatwasser vom Wasser-aufnehmenden Material absorbiert sein.

Um die Form der Brennstoffzellenanordnung beim Bau von Stapeln aus Brennstoffzellen, so genannten "Stacks", zu gewährleisten, wird es weiterhin bevorzugt, dass das Wasser-aufnehmende Material inkompressibel ist. Auf diese Weise bleiben die Kanäle auch dann offen und mit dem vorgesehenen Querschnitt erhalten, wenn von außen ein Druck auf den Brennstoffzellenstapel ausgeübt wird, um die einzelnen Platten dicht gegeneinander zu pressen. Alternativ ist es auch möglich, Material einer definierten Kompressibilität zu verwenden und bei der Konstruktion diese Kompressibilität und den bei der Montage zu erwartenden Druck für die Bemessung des Wasser-aufnehmenden Materials zu berücksichtigen, um nach Montage ein komprimiertes Wasser-aufnehmendes Material mit den gewünschten Enddimensionen zu erhalten. In Fällen, in denen dass Wasser-aufnehmende Material so angeordnet ist, dass kein Kompressionsdruck ausgeübt wird, ist die Kompressibilität des Wasser-aufnehmenden Materials keine kritische Größe.

Um die Wasseraufnahme bei einem Kaltstart der Brennstoffzelle zu beschleunigen, wird es weiterhin bevorzugt, dass in dem zumindest einen Bereich der Kanalwand, der von dem Wasser-aufnehmenden Material gebildet ist, in der die Kanalwand bildenden Materialoberfläche oberflächenvergrößernde Strukturen angeordnet sind. Durch die vergrößerte Oberfläche kann die Wasseraufnahme des Wasser-aufnehmenden Materials gesteigert werden. Die oberflächenvergrößernden Strukturen können beispielsweise Rillen, vorzugsweise parallel laufende Rillen sein.

Vorzugsweise sind die Kanäle des Kanalelements parallel geführt und stehen an ihren Enden jeweils in Fluidverbindung, um so einen gemeinsamen Zugang und einen gemeinsamen Abgang zu haben.

Alternativ können die Kanäle parallel geführt sein und an ihren Enden so in Verbindung stehen, dass sie einen serpentinenartigen Gesamtkanal mit einem Zugang an einem, an einer Seite der Brennstoffzellenanordnung liegenden Kanal und einem Abgang an einem anderen, an der gegenüberliegenden Seite der Brennstoffzellenanordnung liegenden Kanal bilden.

Vorzugsweise ist die Menge des jedem Kanal zuordbaren, Wasser-aufnehmenden Materials so bemessen, dass das Material in der Lage ist, die bei einem Kaltstart unter typischen Bedingungen auftretenden Wasserkondensate aufzunehmen. Typische Bedingungen sind dabei solche Bedingungen, unter denen eine bestimmte Brennstoffzelle in der Mehrzahl der Fälle oder unter den zu erwartenden Extrembedingungen gestartet wird. Es ist klar, dass diese Bedingungen für eine Brennstoffzelle in einem Fahrzeug anderes sind als bei einer Brennstoffzelle für ein Computersystem, beispielsweise bei einer Notstromversorgung.

Vorzugsweise kann das Wasser-aufnehmende Material das aufgenommene Wasser nach Erreichen einer Betriebstemperatur an durch die Kanäle geführtes Oxidationsgas rückführen, um somit feuchteregulierend zu wirken und eine hinreichende Luftfeuchtigkeit in der Brennstoffzelle sicher zu stellen. Diese Ausführungsvariante ist natürlich besonders bei solchen Brennstoffzellen realisierbar, die meist nur eine kurze Betriebsdauer nach einem Kaltstart zeigen, so dass sich das vom Wasser-aufnehmenden Material gespeicherte Wasser bei seiner Abgabe in das Oxidationsgas noch nicht erschöpft hat.

Nachfolgend wird die Erfindung anhand konkretisierter Ausführungsbeispiele näher erläutert, wobei auf die beigefügten Zeichnungen Bezug genommen wird, in denen folgendes dargestellt ist:
- Figur 1: stellt einen Querschnitt durch eine Brennstoffzelle gemäß einer ersten Ausführungsform der Erfindung dar;
- Figur 2: stellt eine Aufsicht auf die Brennstoffzelle der Figur 1 längs der Linie von B-B von Figur 1 dar, wobei die Linie A-A den Schnitt der Darstellung von Figur 1 zeigt;
- Figur 3: stellt einen gegenüber Figur 1 um 90° gedrehten Querschnitt durch eine Brennstoffzelle gemäß der ersten Ausführungsform längs der Linie C-C von Figur 2 dar;
- Figur 4: stellt einen Querschnitt durch eine Brennstoffzelle gemäß einer zweiten Ausführungsform der Erfindung dar;
- Figur 5: stellt einen Querschnitt durch eine Brennstoffzelle gemäß einer dritten Ausführungsform der Erfindung dar;
- Figur 6: stellt einen um 90° gedrehten Querschnitt durch die Brennstoffzelle gemäß der dritten Ausführungsform der Erfindung dar, der analog der Linie C-C von Figur 2 geführt ist;
- Figur 7: stellt eine Aufsicht auf eine Variante der Brennstoffzelle der Figur 4 längs der Linie von B-B von Figur 4 dar, bei der die Kanäle des Wasser-aufnehmenden Materials serpentinenartig geführt sind, wobei die Linie A-A den Schnitt der Darstellung von Figur 4 zeigt; und
- Figur 8: stellt einen um 90° gedrehten Querschnitt durch die Brennstoffzelle gemäß Figur 7 längs der Linie C-C von Figur 7 dar.

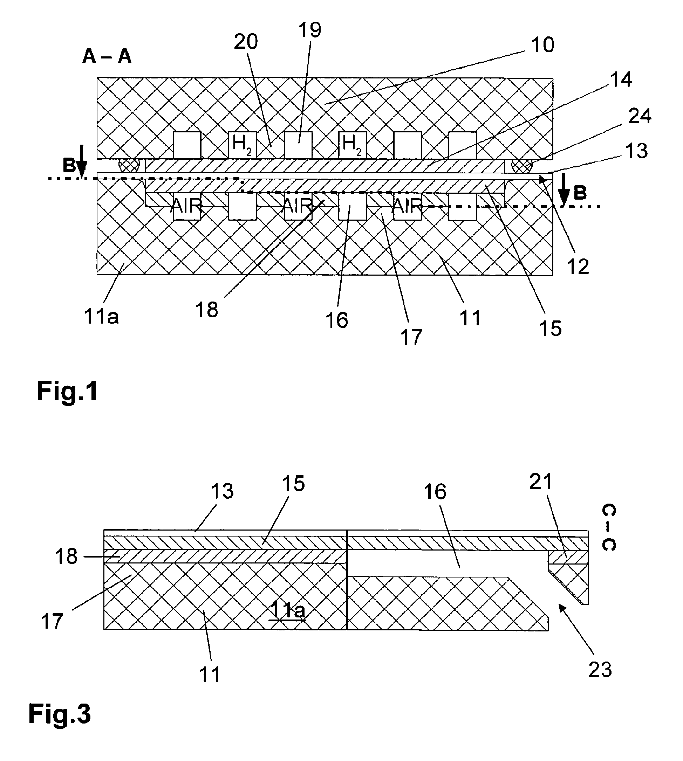

Eine erste Ausführungsform einer erfindungsgemäßen Brennstoffzellenanordnung ist in den Figuren 1 bis 3 gezeigt. Die Brennstoffzellenanordnung umfasst eine zwischen zwei Kanalelementen 10, 11 angeordnete Reaktionsschicht 12, die aus einer semipermeablen Membran 13 und zwei Gasdiffusionslagen (GDL) 14 und 15 besteht. Das der Zufuhr von Oxidationsgas dienende Kanalelement 11 mit Grundplatte 11a (BPP - Bipolarplatte) weist einzelne, voneinander durch Stege 17 getrennte Kanäle 16 auf, durch die das Oxidationsgas (AIR) strömt. Im oberen Bereich dieser Kanäle 16 bestehen die Stege 17 aus Vierkantprofilen eines Wasser-aufnehmenden Materials 18, das in direkter Verbindung mit der Gasdiffusionslage 15 und dem Lumen der Kanäle 16 steht. Bei einem Kaltstart der Brennstoffzelle fällt kondensiertes Wasser auf der Oxidationsseite an, das sogenannte Produktwasser, das von dem Streifen Wasser-aufnehmenden Materials 18 aufgesagt, sonst wie aufgenommen oder adsorbiert wird.

Auf der gegenüberliegenden Seite der Reaktionsschicht 12 ist das weitere Kanalelement 10 angeordnet, das ebenfalls über Kanäle 19 zwischen Stegen 20 verfügt, durch die das Kraftstoffgas, beispielsweise Wasserstoff (H₂), geleitet wird.

Die Brennstoffzellenanordnung weist schließlich noch eine rundum oder seitlich laufende Dichtung 24 auf, welche die Gasdiffusionslagen 14, 15 und damit auch die Kanäle 16, 19 gegenüber der Umgebung abdichtet, um eine Leckage von Kraftstoff oder Oxidationsgas zu verhindern.

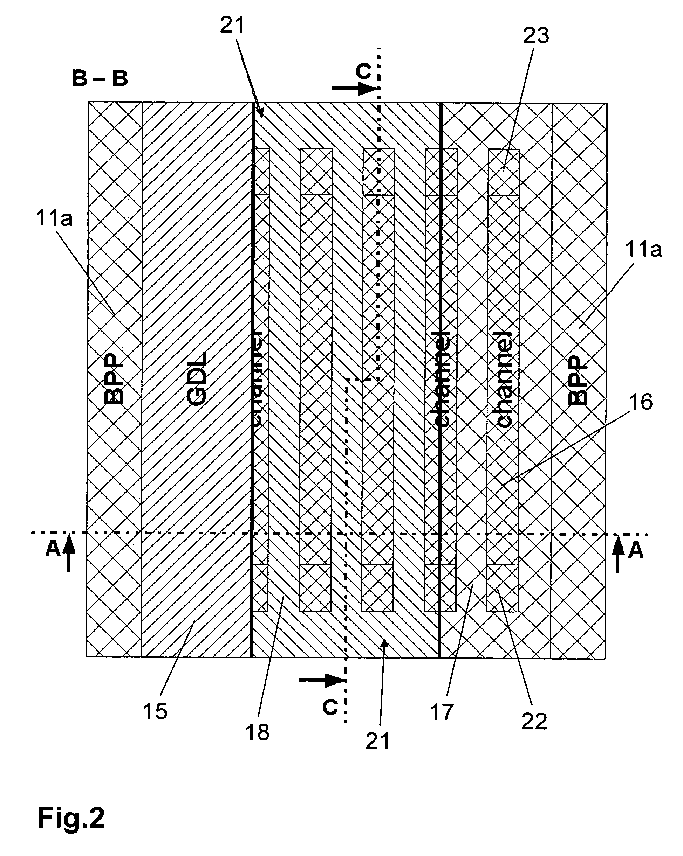

Die in Figur 2 gezeigte Aufsicht der Brennstoffzellenanordnung zeigt die parallel verlaufenden Kanäle (channel) 16 und Stege 17, insbesondere die Streifen Wasser-aufnehmenden Materials 18, die zu einer Platte 21 gehören, die in deren Stirnbereichen die Stege 17 durch Querstreifen miteinander verbunden sind. Das Kanalelement beinhaltet des Weiteren Zu- und Abfuhrdurchbrüche 22, 23 auf beiden Seiten des Kanalelementes, die der Zu- und Abfuhr des Oxidationsgases dienen.

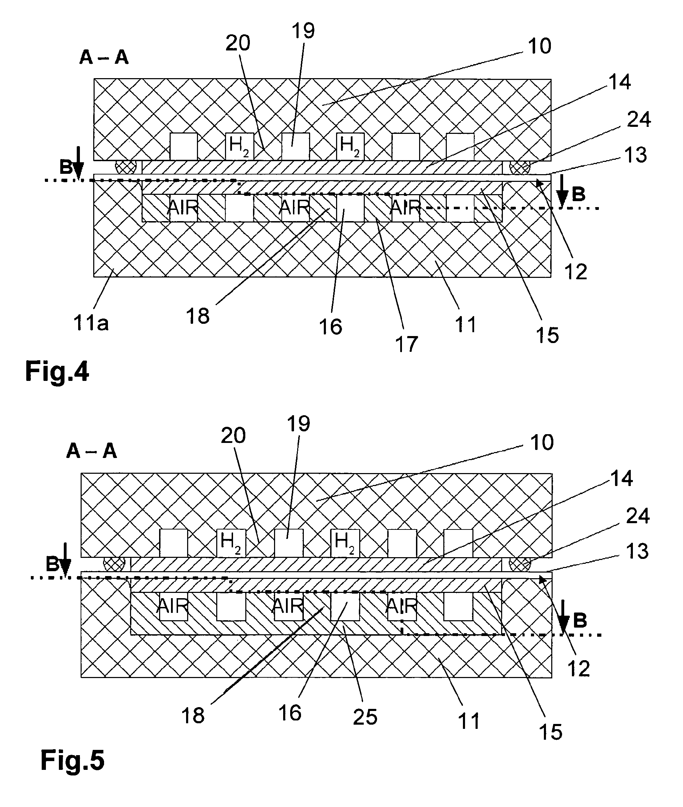

Im Querschnitt der Figur 3 ist die Abfuhr 23 des Kanalelements deutlicher zu erkennen, die aus der Ebene der Kanäle 16 herausführt. Im linken Bereich, der gegenüber dem rechten, einen Kanal 16 darstellenden Bereich nach hinten versetzt ist, ist ein Steg 17 mit einem darüber angeordnetem Bereich Wasser-aufnehmenden Materials 18 dargestellt.

Figur 4 zeigt eine zweite Ausführungsform der vorliegenden Erfindung, bei der gleiche Bauelemente mit denselben Bezugszeichen gekennzeichnet sind. Bei dieser Ausführungsform bestehen die Stege 17 zwischen den Kanälen 16 vollständig aus Wasser-aufnehmendem Material 18. An den Stirnseiten können die einzelnen Stege 17, wie bereits bei der in Figur 2 gezeigten Ausführungsform, mit Querstegen (nicht dargestellt) versehen sein.

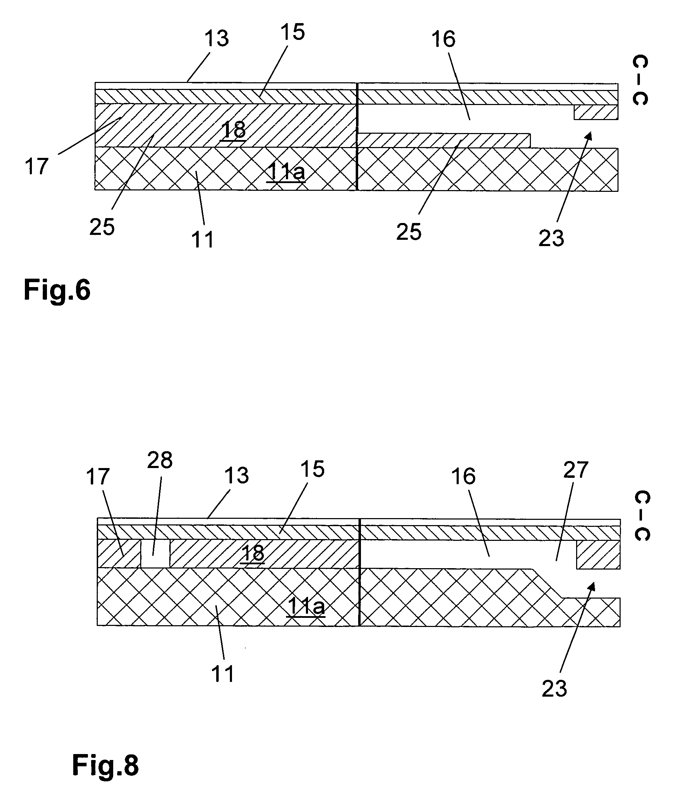

In Figur 5 schließlich bestehen nicht nur die Stege 17, sondern auch ein Bodenbereich 25 des Kanals 16 sowie das Material unmittelbar unter den Stegen 17 aus Wasser-aufnehmendem Material 18. Ein um 90° gedrehter Querschnitt dieser Ausführungsform zeigt in Figur 6 den Bodenbereich 25 unterhalb eines Kanals 16 sowie einen aus Wasser-aufnehmendem Material 18 bestehenden Stegbereich 17.

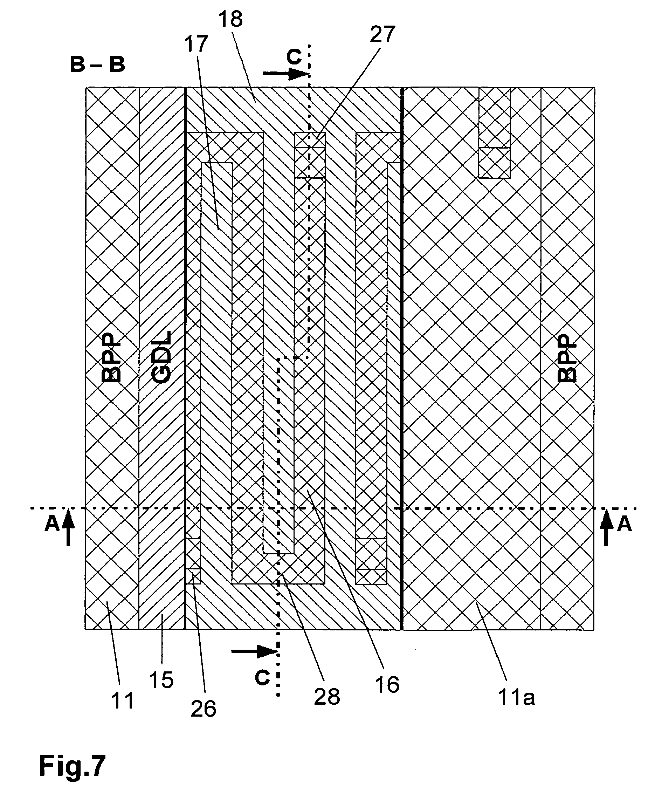

In einer weiteren Ausführungsform einer Brennstoffzellenanordnung gemäß der Erfindung zeigt Figur 7 in Aufsicht ein Kanalsystem, bei dem mehrere Kanäle nicht voneinander getrennt in Zu- und Abfuhren enden, sondern durch alternierende Durchbrechungen 28 in den Stegen 17 miteinander verbunden sind, um einen langen, serpentinenförmigen Kanal zu bilden, der in einer Zufuhr 26 beginnt und in einer Abfuhr 27 endet.

Diese Ausführungsform ist in Figur 8 im Querschnitt gezeigt, wobei die Abfuhr 27 und die Durchbrechung 28 besonders hervorzuheben sind.

Die vorliegende Erfindung stellt eine verbesserte Brennstoffzellenanordnung bereit, mit der durch Verwendung eines Wasser-absorbierbaren Materials im Bereich der Oxidationsgaskanäle ein Kaltstart ohne Zusatzgebläse oder überdimensioniertes Gebläse bewirkt werden kann, ohne das es zu Kondensation von Produktwasser im Kanal kommt. Das Wasser-aufnehmende Material bewirkt zusätzlich eine Leistungssteigernde Befeuchtung des Oxidationsgases durch Wasserabgabe aus dem Wasser-aufnehmenden Material, und bei Verwendung eines hydrophilen Materials als Wasser-aufnehmendes Material kann schließlich auch noch eine Gefrierpunkterniedrigung der Brennstoffzellenanordnung erzielt werden, was den Einsatzbereich der Brennstoffzelle erweitert.

### Bezugszeichenliste

- 10: Kanalelement
- 11: Kanalelement
- 11a: Grundplatte
- 12: Reaktionsschicht
- 13: Membran
- 14: Gasdiffusionslage
- 15: Gasdiffusionslage
- 16: Kanal
- 17: Steg
- 18: Wasser-aufnehmendes Material
- 19: Kanal
- 20: Steg
- 21: Platte
- 22: Zufuhrdurchbruch
- 23: Abfuhrdurchbruch
- 24: Dichtung
- 25: Bodenbereich eines Kanals
- 26: Zufuhr
- 27: Abfuhr
- 28: Durchbruch

## Patentansprüche

1. Brennstoffzellenanordnung, aufweisend eine Reaktionsschicht (12), ein auf einer Seite der Reaktionsschicht (12) angeordnetes, Kanäle (16) aufweisendes Kanalelement (11), das zur Zuführung von Oxidationsgas an eine Gasdiffusionslage durch die Kanäle (16) bestimmt ist, **dadurch gekennzeichnet, dass** zumindest ein Teil des Kanalelements (11) aus einem Wasser-aufnehmenden Material (18) besteht, das über zumindest einen Teil seiner Oberfläche mit den von dem Kanalelement (11) gebildeten Kanälen (16) in Verbindung steht.

2. Brennstoffzellenanordnung gemäß Anspruch 1, **dadurch gekennzeichnet, dass** sie ein Oxidationsgaszufuhrsystem beinhaltet, das bezüglich der Volumen des von ihm in die Kanäle (16) einleitbaren Oxidationsgases auf den Betrieb in einem Normalbetriebszustand ausgelegt ist, jedoch aufgrund der Bemessung des Wasser-aufnehmenden Materials (18) kein zusätzliches und/oder stärkeres Oxidationsgaszufuhrsystem für einen Kaltstart beinhaltet.

3. Brennstoffzellenanordnung gemäß Anspruch 1 oder 2, **dadurch gekennzeichnet, dass** die Kanäle (16) des Kanalelements (11) durch Stege (17) zwischen einer Grundplatte (11a) und der Gasdiffusionslage (12) abgegrenzt sind und zumindest ein Teil des Querschnitts der Stege (17) aus Wasser-aufnehmendem Material (18) ausgebildet ist.

4. Brennstoffzellenanordnung gemäß Anspruch 1 oder 2, **dadurch gekennzeichnet, dass** die Kanäle (16) des Kanalelements (11) auf allen Seiten außer der Öffnung zur Reaktionsschicht hin von Wasser-aufnehmendem Material (18) umgeben sind.

5. Brennstoffzellenanordnung gemäß einem der Ansprüche 1 bis 4, **dadurch gekennzeichnet, dass** sich das Wasser-aufnehmende Material (18) über einen Teil der Länge der Kanäle (16) erstreckt.

6. Brennstoffzellenanordnung gemäß einem der Ansprüche 1 bis 5, **dadurch gekennzeichnet, dass** das Wasser-aufnehmende Material (18) ein hydrophiles Material und/oder ein mikrokapillares Material ist.

7. Brennstoffzellenanordnung gemäß einem der Ansprüche 1 bis 6, **dadurch gekennzeichnet, dass** das entstehende Kondensatwasser an die Oberfläche des Wasser-aufnehmenden Materials (18) adsorbiert ist.

8. Brennstoffzellenanordnung gemäß einem der Ansprüche 1 bis 7, **dadurch gekennzeichnet, dass** das entstehende Kondensatwasser vom Wasser-aufnehmenden Material (18) absorbiert ist.

9. Brennstoffzellenanordnung gemäß einem der Ansprüche 1 bis 8, **dadurch gekennzeichnet, dass** das Wasser-aufnehmende Material (18) inkompressibel ist.

10. Brennstoffzellenanordnung gemäß einem der Ansprüche 1 bis 9, **dadurch gekennzeichnet, dass** in dem zumindest einen Bereich der Kanalwand, der von dem Wasser-aufnehmenden Material (18) gebildet ist, in der die Kanalwand bildende Materialoberfläche oberflächenvergrößernde Strukturen angeordnet sind.

11. Brennstoffzellenanordnung gemäß einem der Ansprüche 1 bis 10, **dadurch gekennzeichnet, dass** die Kanäle parallel (16) geführt sind und an ihren Enden jeweils in Fluidverbindung stehen.

12. Brennstoffzellenanordnung gemäß einem der Ansprüche 1 bis 11, **dadurch gekennzeichnet, dass** die Kanäle (16) parallel geführt sind und an ihren Enden so in Verbindung stehen, dass sie einen serpentinenartigen Gesamtkanal mit einem Zugang (26) an einem, an einer Seite der Brennstoffzellenanordnung liegenden Kanal (16) und einem Abgang (27) an einem anderen, an der gegenüberliegenden Seite der Brennstoffzellenanordnung liegenden Kanal (16) bilden.

13. Brennstoffzellenanordnung gemäß einem der Ansprüche 1 bis 12, **dadurch gekennzeichnet, dass** die Menge des jedem Kanal (16) zuordbaren, Wasser-aufnehmenden Materials (18) so bemessen ist, dass das Material in der Lage ist, die bei einem Kaltstart unter typischen Bedingungen auftretenden Wasserkondensate aufzunehmen.

14. Brennstoffzellenanordnung gemäß einem der Ansprüche 1 bis 13, **dadurch gekennzeichnet, dass** das Wasser-aufnehmende Material (18) das aufgenommene Wasser nach Erreichen einer Betriebstemperatur an durch die Kanäle (16) geführtes Oxidationsgas rückführen kann.
